# EUROPEAN PATENT SPECIFICATION

(11) **EP 3 257 638 B1**
(45) Date of publication and mention of the grant of the patent: **14.11.2018**
(21) Application number: 17171662.4
(22) Date of filing: 18.05.2017
(51) Int. Cl.: B25J 19/06, B25J 19/00, B25J 21/00, F16M 3/00

(54) **ROBOT CELL**
ROBOTERZELLE
CELLULE DE ROBOT

(30) Priority: 16.06.2016 IT UA20164436
(43) Date of publication of application: 20.12.2017
(73) Proprietor: Comau S.p.A., 10095 Grugliasco (Torino) (IT)
(72) Inventor: DE PADOVA, Michele, 10095 Grugliasco (Torino) (IT); GASTALDI, Gianluca, 10095 Grugliasco (Torino) (IT)
(74) Representative: Frontoni, Stefano

(56) References cited:
- DE-A1- 3 532 305
- DE-A1-102012 005 735
- DE-U1-202010 007 645
- US-A- 5 129 611
- US-A1- 2013 119 039

## Description

### Field of the invention

The present invention relates to a robot cell for demonstration purposes.

In general, such a cell comprises:
- a robot;
- a base, which carries a unit for control of said robot and defines a working surface where said robot operates; and
- a protective screen configured for separating from outside said working surface and said robot that operates on said working surface.

The cell in question constitutes in effect a work centre, which, however, is not designed for use in the framework of an actual production process, but rather for use in activities of a purely demonstration nature. The cell in question may, for example, be used in sector fairs, in training operators, or else even in schools for exclusively didactic purposes.

It should be noted that, in the specific field of industrial robots, cells of this type have appeared only with the spread, also in the industrial field, of smaller-sized manipulator robots. These robots usually have a maximum carrying capacity, at the wrist, of a few kilograms, and maximum dimensions, in height and length, of around one metre. The robots in question are commonly used for carrying out an extremely wide range of operations, in the framework of any industrial process, or as replacement for the operator or else in co-operation with, or support to, the operator.

In the light of what has been said above, it is clear that the normal use of a robot cell of the type in question is substantially different from that of a traditional work centre, envisaging, in particular, frequent displacements for reaching the various exhibition centres, which may be, as has been seen, industrial plants, schools, sector fairs, etc.

To facilitate transport and displacements, already today cells of this type have their own base mounted on swivel wheels so as to be displaceable and manoeuvrable.

Such an educational cell mounted on wheels is for example disclosed in document US 2013/0119039 A1.

### Object and summary of the invention

The object of the present invention is to provide a robot cell that will be improved as compared to the known cells, and in particular that will afford a series of advantages as regards the operations of transport and storage when not in use.

The object referred to is achieved via a robot cell comprising the characteristics specified in Claim 1.

A further object of the present invention is to provide a work cell that has a particularly functional and flexible configuration, in the perspective of a use of the cell for multiple applications.

### Brief description of the drawings and of some embodiments of the invention

Further characteristics and advantages of the invention will emerge from the ensuing description with reference to the annexed drawings, which are provided purely by way of non-limiting example and in which:
- Figure 1 is a perspective view of the robot cell described herein according to a possible embodiment, the cell being represented in an operative configuration thereof;
- Figure 2 illustrates the work cell of Figure 1, in a compact configuration thereof;
- Figure 3 is a front view of the cell represented in Figure 2, where some parts of the base of the cell have been removed in order to illustrate how the robot sets itself inside the base in the compact configuration assumed by the cell;

- Figures 4A and 4B are, respectively, a front view and a lateral view of the robot cell illustrated in Figure 1, where also in this case some parts of the base of the cell have been removed to show the systems of movement of the robot and of the protective screen, which will be illustrated in detail in what follows; and
- Figure 5 is a schematic representation of the systems for movement of the robot and of the protective screen provided in the cell of Figure 1.

In the ensuing description various specific details are illustrated aimed at providing an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As has been seen above, the robot cell described herein constitutes a work centre for demonstration purposes. Illustrated in the figures is a preferred embodiment of the cell described herein.

In a way in itself known, the robot cell described herein, designated as a whole in the figures by the reference number 10, comprises:
- a robot 20;
- a base 40, which carries the robot 20 and defines a working surface P, where the robot operates; and
- a protective screen 50, configured for separating from outside the working surface P and the robot operating on the aforesaid surface.

The robot 20 is a small-sized industrial manipulator robot. In the example illustrated, the robot is represented by the robot that is marketed by the present applicant under the brand name Racer 3®.

The cell described herein is characterized in that it is able to assume a configuration of minimum encumbrance, which has been specifically envisaged for transport of the cell and/or for storage thereof, for example in a warehouse, waiting to be used again. This configuration affords evident advantages, in particular, in terms of ease of transport, space saving, and reduction of the costs of transport and storage. Moreover, as will become evident in what follows, this configuration also enables integrity of the cell to be safeguarded during transport.

The cell is able to assume the configuration of minimum encumbrance referred to above, thanks to the following characteristics:
- the robot 20 is carried by a vertical-movement system and is vertically mobile between a raised position, in which it can operate on the working surface P, and a lowered position, in which it is set underneath the aforesaid surface and is contained within the base 40; and
- the protective screen 50 is supported by a vertical-movement system and is vertically mobile between a raised, operative, position, in which it separates the working surface P and the robot 20 that operates on the aforesaid surface from outside, and a lowered position, in which it extends prevalently underneath the working surface P.

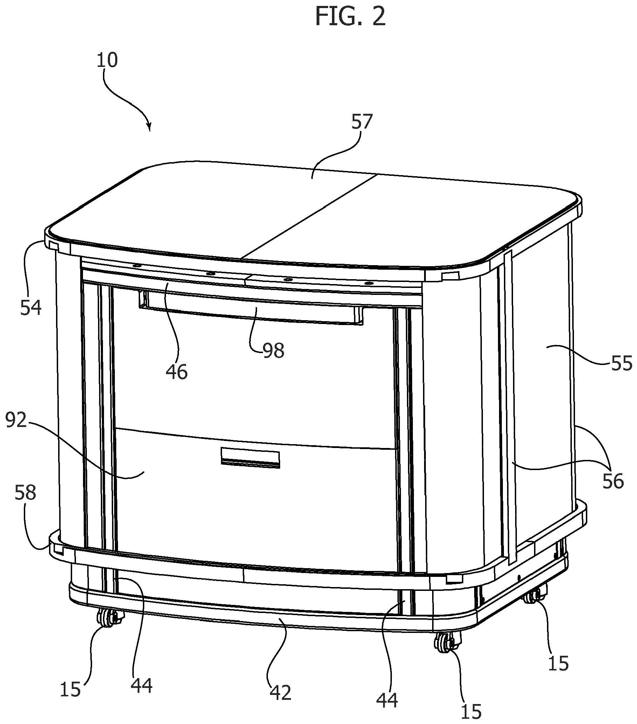

As regards the aforesaid characteristics, the configuration of minimum encumbrance referred to above is assumed by the cell when the robot and the protective screen are brought into the respective lowered position, as illustrated in Figure 2. Since the screen 50 is able to slide out of the base 40, in its lowered position it is set around the base 40, thus enclosing it.

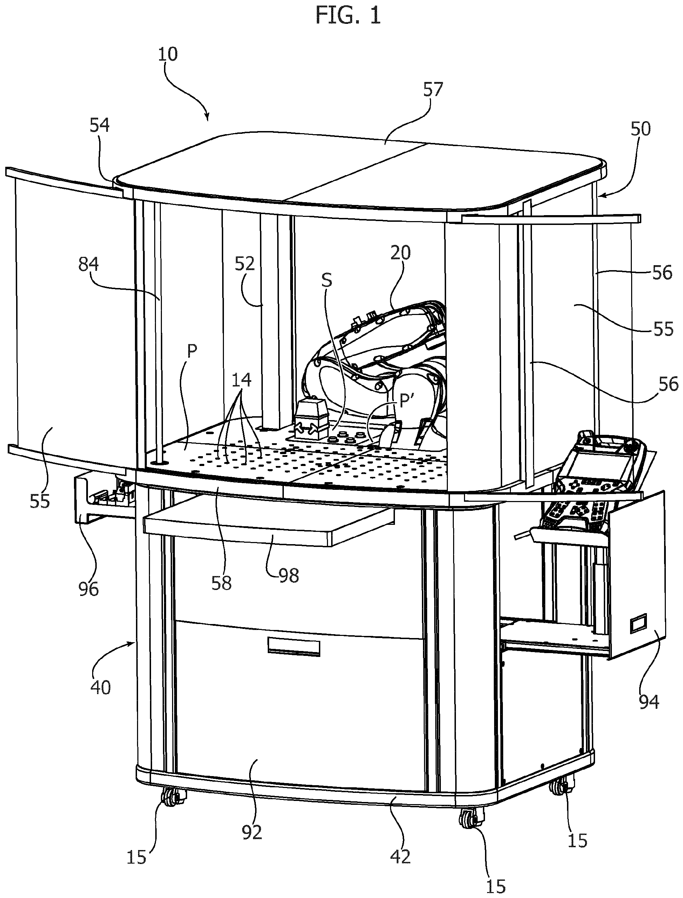

A normal operative configuration of the cell 10 is, instead, illustrated in Figure 1. In this condition, the robot 20 and the protective screen 50 are each in the respective raised position.

It should be noted that the cell may envisage one and the same system for movement of the robot 20 and of the screen 50, or else two independent systems as in the embodiment that will be illustrated hereinafter.

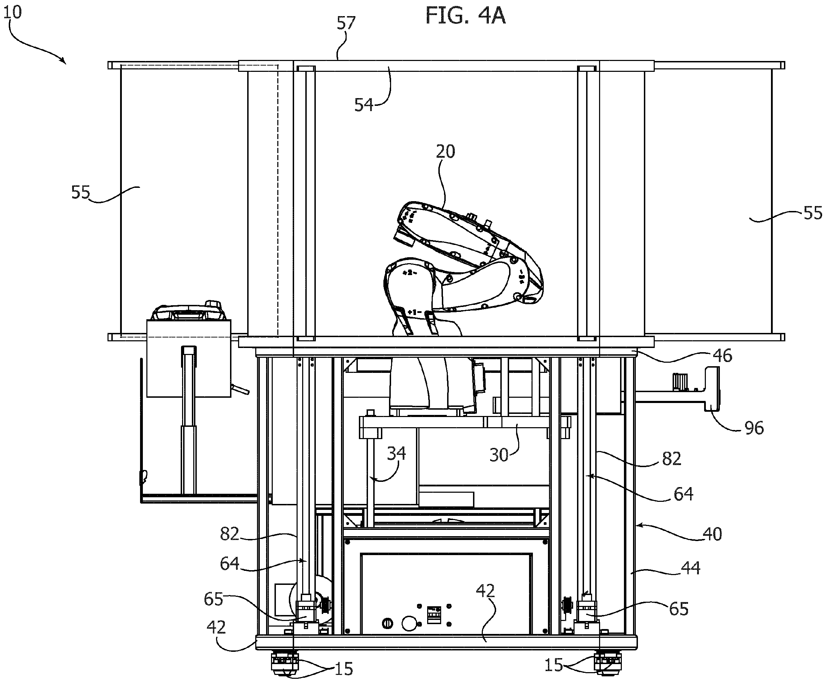

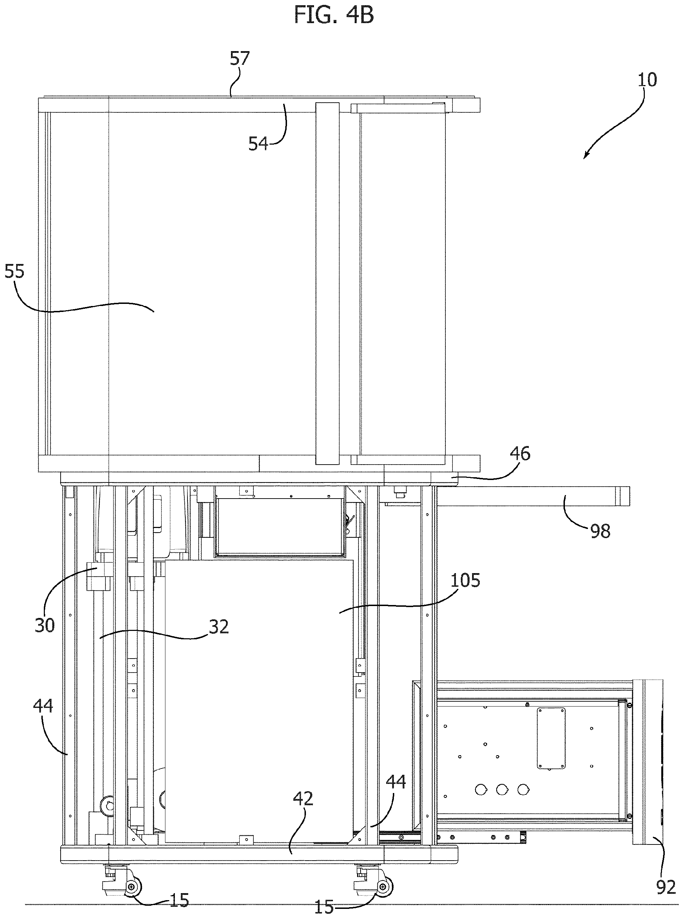

To come now to the detail of the various characteristics of the cell, in various embodiments, as in the one illustrated (see Figure 4), the base 40 is formed by a mount comprising a bottom frame 42, a plurality of vertical uprights 44, and a top frame 46.

Mounted on the base frame 42 are one or more supporting plates that carry the driving assemblies that will be described in what follows. Mounted on the underside of the aforesaid plates are, instead, a series of swivel wheels 15.

The top frame 46 carries at the top one or more plates 48, which together define the aforementioned working surface P. Moreover carried on the same frame are a series of supporting plates (not visible), similar to the ones carried by the base frame 42, which are arranged underneath the working surface P.

In various preferred embodiments, as in the one illustrated, the working surface P has an array of threaded holes 14 for fast fixing on the aforesaid surface of possible accessories or devices with which the robot 20 is designed to operate. Moreover provided on the aforesaid surface are a series of connectors S for providing the supplies necessary for said accessories or devices, such as electric-power supply or compressed-air supply.

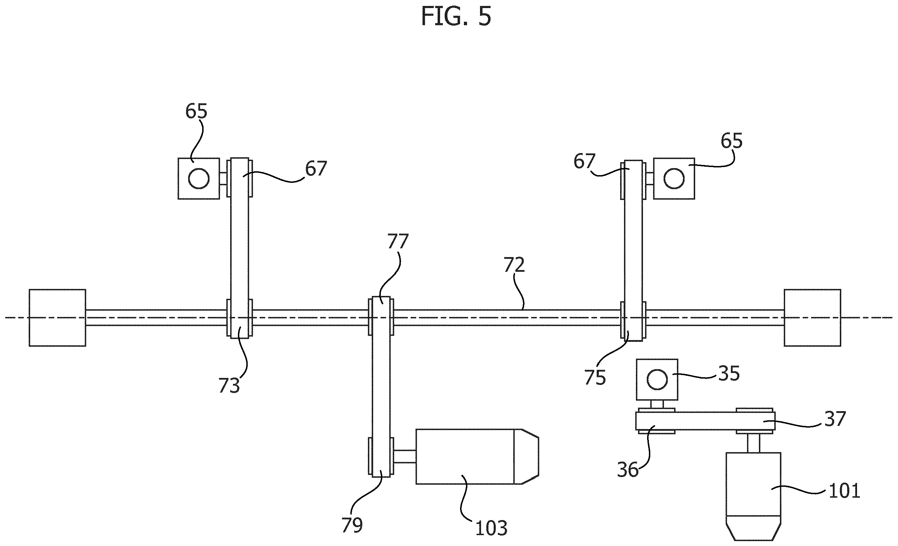

The robot 20 is mounted on a stand 30 carried by a series of cylindrical guides 32 and by a jack 34 of a rotating-screw type. The internal-screw member is fixedly constrained to the stand 30, whereas the external-screw member is constrained between the supporting plates of the two frames, the top one 42 and the bottom one 46. At the bottom the external-screw member terminates within a block 35 for transmission of motion, which is fixed on a plate of the base frame 42. In various embodiments, as in the one illustrated (see in particular Figure 5), this block 35 has, on the output shaft, a pulley 36 that is connected via a belt to a pulley 37 fitted on the output shaft of an electric motor 101, which is also carried by a plate of the base frame 42.

With reference to the cylindrical guides 32, their respective guide bushings are directly associated to the stand 30, whereas the cylindrical guide bars are fixed, at the bottom and at the top, to the plates of the frames 42 and 46, respectively.

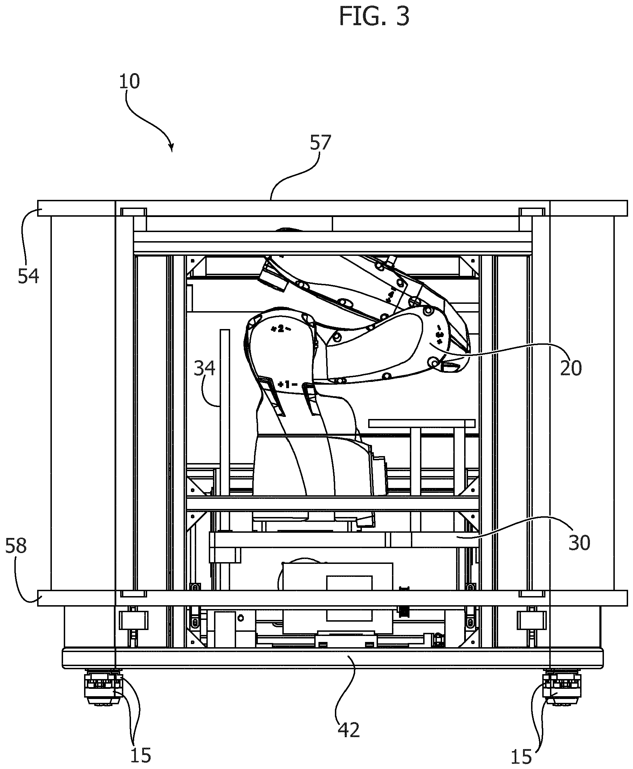

The motor 101 is designed to govern, through the jack 34, the movement of lowering and raising of the stand 30. This can in particular move between a position of minimum height (see Figure 3), which corresponds to the aforementioned lowered position of the robot 20, and a position of maximum height (see Figures 4A and 4B), which corresponds to the aforementioned raised position of the robot. Appropriate end-of-travel elements of a mechanical, electrical, or else electromechanical type define these two end positions of the stand.

As may be seen in Figure 1, the working surface P has a through opening P', through which, from the stand 30, the robot projects above the working surface P and through which the robot passes when it moves into its lowered position. In this position, the robot 20 is entirely contained within the base 40. For its own part, the robot assumes, in this position, a completely contained condition so as to occupy as little space as possible and hence find sufficient space within the base, for its housing. The control unit of the cell may be configured for bringing the robot into this condition whenever it is set in an inoperative state. It should be noted that preferably - as envisaged in the embodiment illustrated - this robot is an articulated robot with at least four axes, which has at least three successive horizontal axes of articulation. This type of robot is in fact able to assume a completely collapsed position and is hence particularly suited to being used in the cell described herein.

With reference to the protective screen 50, in various preferred embodiments, as in the one illustrated, it has a frame comprising two main uprights 52, arranged symmetrically - with respect to a vertical plane orthogonal to the front side of the base - in a rear region of the working surface, and a cage structure, which is carried by these two uprights and encloses the working surface P. As will be seen in what follows, the two uprights 52 are carried by a vertical-movement system enclosed within the base 40.

The cage structure mentioned, carried by the two uprights 52, is constituted by a top horizontal frame 54, fixed, via brackets (not visible), to the top ends of the uprights 52, a series of vertical rods 56 that hang from the top frame, and a bottom frame 58 carried by the bottom ends of the rods 56 and having a shape substantially corresponding to that of the top frame 54.

The two frames 54 and 58 define in plan view a closed profile that is larger than the overall section of the base 40 and, in particular, that surrounds the aforesaid base so that the overall structure described will be free to slide without any risk of interference with respect to the base 40.

Mounted between the two frames 54 and 58 are a series of panels 55, preferably made of transparent plastic material, for example polycarbonate, which come to close totally, on all sides, the volume enclosed within the structure. Preferably, on the front side the screen 50 has two mobile panels, which can slide as in the example illustrated (see Figure 1), or else swivel as in alternative embodiments, to enable access to the inside of the protective screen. Further panels 57 are mounted on the top frame 54 to define the roof of the screen 50.

With reference now to the system for movement of the screen 50, this comprises two lifting jacks 64, each associated to one of the two main uprights 52, and a series of guides 82 and 84.

With reference to the jacks 64, the internal-screw member (not illustrated) of each jack is fixed to the bottom end of the respective upright 52. The screw member is, instead, constrained between the supporting plates of the two top and bottom frames 42 and 46. At the bottom, the screw member terminates within a block 65 for transmission of motion, which is fixed on a plate of the base frame 42.

In various embodiments, as in the one illustrated (see in this connection Figure 5), the transmission blocks 65 of the two jacks have on their output shaft respective pulleys 67 that are connected via a belt to two pulleys 73, 75 carried by one and the same horizontal shaft 72 constrained via supports, at portions thereof set at a distance apart from one another, to the plates of the bottom frame 42. This shaft has, in a position between the two pulleys 73, 75, a further pulley 77, which is in turn connected via a belt to a pulley 79 fitted on the output shaft of an electric motor 103. The motor 103 is also carried by a supporting plate of the bottom frame 42.

The motor 103 is designed to govern, through the two jacks 64, the movement of lowering and raising of the screen 50. As has been seen above, the latter can move between the lowered position illustrated in Figures 2 and 3 and the raised position of Figures 4A and 4B. Appropriate end-of-travel elements of a mechanical, electrical, or else electromechanical type define these end positions of the screen 50.

Associated to the two uprights 52 are two respective guides 82, which are preferably prismatic, designed to guide the movement of sliding of the uprights with respect to the base 40. The two vertical bars of the prismatic guide are mounted up against the two uprights 52 and are fixed at the bottom and at the top to the plates of the frames 42 and 46, respectively. The sliding blocks of the guides are fixed to the bottom ends of the two uprights 52.

Further guides, preferably of a cylindrical type, are, instead, associated to the front region the screen 50. These envisage cylindrical rods 84 that are suspended on the top frame 54 of the screen 50 and engage guide bushings (not visible) carried by the supporting plates of the top frame 46 of the base 40. Possibly, further cylindrical guides may be associated, according to similar modalities, to the bottom frame 58 of the screen 50.

The cell 10 comprises a unit for controlling the movement of the protective screen 50 and of the robot 20. This movement may be activated by the operator through a control panel (not visible), which is preferably set on an outer side of the base 40, in a bottom region thereof that is readily accessible even when the protective screen 50 is in its lowered position and surrounds the base itself.

As may be seen in Figure 1, applied on the frame of the base are outer coating panels that together define a casing within which the various means for driving and control of the cell are enclosed. In this connection, in addition to the means already referred to, moreover contained within the base are a unit for control of the robot (not visible) and an inverter assembly 105 for driving the two electric motors 101 and 103.

In various preferred embodiments, as in the one illustrated, the control unit is set within an extractable drawer 92 provided on the front side of the base. The base moreover envisages two further drawers 94, 96, provided on its opposite sides, first of which carries a portable control device of the robot (the so-called "teach pendant"), and the second of which is, instead, equipped for installation of devices for communication with the robotized system (robot cabin), for example HMIs, PLCs, mini computers (e.g., Raspberry, Arduino, etc.), electronic boards, electrical accessories, etc.

The drawer 94 is equipped with an ergonomic support for the teach pendant, which is height-adjustable and slightly inclined backwards so as to enable the operator to operate conveniently on the teach pendant, even leaving it resting on the support.

At the front, the base 40 moreover has an extractable shelf 98, designed to constitute an accessory resting surface, for example for carrying a laptop.

In various preferred embodiments, associated to the various drawers referred to, as also to the shelf, are electrical or electromechanical switches configured for checking their position, and the signals of these are used by the control unit of the cell for enabling movement of the protective screen only when the drawers and the shelf are in their closed configuration.

In various preferred embodiments, the cell 10 may moreover be equipped with a system for taking pictures in order to record what is occurring inside the cell during the demonstration activities, and the pictures taken may be displayed in real time on a separate display. This system and the display associated thereto increase accessibility to the cell and exploitation of the demonstration activities conducted therein, and may advantageously be used above all in the cases where the public that is present at the demonstration exceeds a certain number of people so that some could have a poor direct view. Preferably, the shooting system in question has at least one camera mounted in an overhead position on an inner side of the screen 50. The cell has a series of connectors for direct connection of the camera to an external display and possibly also for concomitant connection of the camera itself to a laptop.

Of course, without prejudice to the principle of the invention, the details of construction and the embodiments may vary, even significantly, with respect to what has been illustrated herein purely by way of non-limiting example, without thereby departing from the scope of the invention, as is defined by the annexed claims. In this connection, it should be noted that, instead of the screw jacks referred to above, it is possible to envisage jacks of some other type, for example fluid-operated jacks. Likewise, the types of guide used for guiding movement of the stand 30 and of the screen 50 may also vary from the ones indicated.

As anticipated above, the cell 10 may in any case envisage a vertical-movement system common for the robot 20 and the screen 50. With reference to the embodiment illustrated above, for example, the cell may present only the jacks 64 that drive the movement of the screen 50, and, in this case, the stand 30 is then fixedly constrained via brackets to the uprights 52 of the screen 50, so that also this can be moved by the jacks.

Finally, it should be noted that, instead of the jacks in question, it is also possible to envisage completely mechanical devices operating by way of counterweights.

## Claims

1. A robot cell, in particular for demonstration purposes, of the type comprising:
- a robot (20);
- a base (40), which carries a unit for control of said robot and defines a working surface (P) where said robot (20) operates; and
- a protective screen (50) configured for separating from outside said working surface (P) and said robot (20) that operates on said working surface;
said robot cell being **characterized in that**:
- said robot is carried by a vertical-movement system (34, 32) and is vertically mobile between a raised position, in which said robot (20) can operate on said working surface (P), and a lowered position, in which said robot is set underneath said working surface (P) and is contained within said base (40); and
- said protective screen (50) is carried by a vertical-movement system (64, 82) and is vertically mobile between a raised position, in which it separates from outside said working surface (P) and said robot (20) that operates on said working surface (P), and a lowered position, in which it extends prevalently underneath said working surface (P).

2. The cell according to Claim 1, wherein said protective screen (50) can slide out of said base (40) and in said lowered position it surrounds said base (40) .

3. The cell according to any one of the preceding claims, wherein said screen (50) comprises at least one upright (52), which is carried by said vertical-movement system, and a protective casing (55, 54, 56, 58), which is carried by said upright and is free to slide out of said base.

4. The cell according to any one of the preceding claims, wherein said screen (50) has a frame comprising at least one upright (52), which is carried by said vertical-movement system, and a cage structure (54, 56, 58), which is carried by said upright and is free to slide out of said base.

5. The cell according to Claim 4, wherein said cage structure comprises a top frame (54) fixed to the top end of said upright (52), a bottom frame (58), and a series of rods (56), which connect together said top and bottom frames (54, 58).

6. The cell according to Claim 4, wherein said cage structure comprises a top frame (54) and a series of rods (56), which hang from said top frame.

7. The cell according to Claim 5, wherein said bottom frame (54, 58) has in plan view a closed profile that is larger than the overall section of said base (40) and surrounds said base remaining at a distance therefrom so as to be free to slide with respect to said base (40).

8. The cell according to any one of the preceding claims, wherein said robot is mounted on a stand (30) carried by said vertical-movement system (34, 32).

9. The cell according to any one of the preceding claims, wherein said movement system comprises at least one lifting jack (34, 64), at least one slide guide (32, 82, 84), and at least one electric motor (101, 103) .

10. The cell according to any one of the preceding claims, comprising a unit for control of said vertical-movement system.

11. The cell according to any one of the preceding claims, comprising at least one of the following components:
- an extractable drawer (92) containing said unit for control of said robot;
- an extractable drawer (94) containing a mobile device that can be manually gripped for control of said robot by the operator, wherein preferably said drawer contains a support for said device, which is inclined backwards and is height-adjustable; and
- an extractable resting shelf (98).

12. The cell according to any one of the preceding claims, comprising at least one camera for taking shots of the working surface of said cell.

13. The cell according to any one of the preceding claims, wherein said working surface (P) has an orderly array of holes (14) for fast installation of accessories on said working surface.

14. The cell according to any one of the preceding claims, wherein said system for movement of said robot constitutes a first movement system, and said system for movement of said screen (50) constitutes a second movement system, wherein said first and second systems each comprise at least one lifting jack (34, 64), at least one slide guide (32, 82, 84), and at least one electric motor (101, 103).

## Patentansprüche

1. Roboterzelle, insbesondere für Demonstrationszwecke, des Typs, der Folgendes umfasst:
- einen Roboter (20);
- eine Basis (40), die eine Einheit zur Steuerung des Roboters trägt und eine Arbeitsfläche (P) definiert, wo der Roboter (20) betrieben wird; und
- eine Schutzabschirmung (50), die dafür ausgelegt ist, die Arbeitsfläche (P) und den Roboter (20), der auf der Arbeitsfläche betrieben wird, von der äußeren Umgebung zu trennen;
wobei die Roboterzelle **dadurch gekennzeichnet ist, dass**:
- der Roboter durch ein System zur vertikalen Bewegung (34, 32) getragen wird und zwischen folgenden Positionen vertikal beweglich ist: einer angehobenen Position, in welcher der Roboter (20) auf der Arbeitsfläche (P) betrieben werden kann, und einer abgesenkten Position, in welcher sich der Roboter unterhalb der Arbeitsfläche (P) befindet und in der Basis (40) enthalten ist; und
- die Schutzabschirmung (50) durch ein System zur vertikalen Bewegung (64, 82) getragen wird und zwischen folgenden Positionen vertikal beweglich ist: einer angehobenen Position, in der sie die Arbeitsfläche (P) und den Roboter (20), der auf der Arbeitsfläche (P) betrieben wird, von der äußeren Umgebung trennt, und einer abgesenkten Position, in der sie sich vorwiegend unterhalb der Arbeitsfläche (P) erstreckt.

2. Zelle nach Anspruch 1, wobei die Schutzabschirmung (50) aus der Basis (40) gleiten kann und in der abgesenkten Position die Basis (40) umgibt.

3. Zelle nach einem der vorhergehenden Ansprüche, wobei die Abschirmung (50) wenigstens einen Pfosten (52), der durch das System zur vertikalen Bewegung getragen wird, und ein Schutzgehäuse (55, 54, 56, 58), das durch den Pfosten getragen wird und frei aus der Basis gleiten kann, umfasst.

4. Zelle nach einem der vorhergehenden Ansprüche, wobei die Abschirmung (50) Folgendes aufweist: einen Rahmen, der wenigstens einen Pfosten (52) umfasst, der durch das System zur vertikalen Bewegung getragen wird, und eine Käfigstruktur (54, 56, 58), die durch den Pfosten getragen wird und frei aus der Basis gleiten kann.

5. Zelle nach Anspruch 4, wobei die Käfigstruktur Folgendes umfasst: einen oberen Rahmen (54), der am oberen Ende des Pfostens (52) befestigt ist, einen unteren Rahmen (58) und eine Reihe von Stangen (56), die den oberen und den unteren Rahmen (54, 58) miteinander verbinden.

6. Zelle nach Anspruch 4, wobei die Käfigstruktur einen oberen Rahmen (54) und eine Reihe von Stangen (56) umfasst, die von dem oberen Rahmen herabhängen.

7. Zelle nach Anspruch 5, wobei der untere Rahmen (54, 58) in Draufsicht ein geschlossenes Profil aufweist, das größer ist als der gesamte Querschnitt der Basis (40) und das die übrige Basis in einer Entfernung von dieser umgibt, so dass er in Bezug auf die Basis (40) frei gleiten kann.

8. Zelle nach einem der vorhergehenden Ansprüche, wobei der Roboter auf einem Gestell (30) montiert ist, das durch das System zur vertikalen Bewegung (34, 32) getragen wird.

9. Zelle nach einem der vorhergehenden Ansprüche, wobei das Bewegungssystem wenigstens eine Hebewinde (34, 64), wenigstens eine Gleitführung (32, 82, 84) und wenigstens einen Elektromotor (101, 103) umfasst.

10. Zelle nach einem der vorhergehenden Ansprüche, umfassend eine Einheit zur Steuerung des Systems zur vertikalen Bewegung.

11. Zelle nach einem der vorhergehenden Ansprüche, umfassend wenigstens eine der folgenden Komponenten:
- eine ausziehbare Schublade (92), welche die Einheit zur Steuerung des Roboters enthält;
- eine ausziehbare Schublade (94), die eine bewegliche Vorrichtung enthält, die mit der Hand ergriffen werden kann, um den Roboter durch die Bedienungsperson zu steuern, wobei die Schublade vorzugsweise eine Auflage für die Vorrichtung enthält, die nach hinten geneigt ist und höhenverstellbar ist; und
- ein ausziehbares Ablagebrett (98).

12. Zelle nach einem der vorhergehenden Ansprüche, umfassend wenigstens eine Kamera zum Aufnehmen von Bildern der Arbeitsfläche der Zelle.

13. Zelle nach einem der vorhergehenden Ansprüche, wobei die Arbeitsfläche (P) eine regelmäßige Anordnung von Löchern (14) zum raschen Anbringen von Zubehör auf der Arbeitsfläche umfasst.

14. Zelle nach einem der vorhergehenden Ansprüche, wobei das System zur Bewegung des Roboters ein erstes Bewegungssystem darstellt und das System zur Bewegung der Abschirmung (50) ein zweites Bewegungssystem darstellt, wobei das erste und das zweite System jeweils wenigstens eine Hebewinde (34, 64), wenigstens eine Gleitführung (32, 82, 84) und wenigstens einen Elektromotor (101, 103) umfassen.

## Revendications

1. Cellule de robot, en particulier à des fins de démonstration, du type comprenant :
- un robot (20) ;
- une base (40), qui porte une unité de commande dudit robot et définit une surface de travail (P) où ledit robot (20) fonctionne ; et
- un écran de protection (50) configuré pour séparer de l'extérieur ladite surface de travail (P) et ledit robot (20) qui fonctionne sur ladite surface de travail ;
ladite cellule de robot étant **caractérisée en ce que** :
- ledit robot est porté par un système de déplacement vertical (34, 32) et est verticalement mobile entre une position soulevée, dans laquelle ledit robot (20) peut fonctionner sur ladite surface de travail (P), et une position abaissée, dans laquelle ledit robot est placé en dessous de ladite surface de travail (P) et est contenu dans ladite base (40) ; et
- ledit écran de protection (50) est porté par un système de déplacement vertical (64, 82) et est verticalement mobile entre une position soulevée, dans laquelle il sépare de l'extérieur ladite surface de travail (P) et ledit robot (20) qui fonctionne sur ladite surface de travail (P), et une position abaissée, dans laquelle il s'étend principalement en dessous de ladite surface de travail (P).

2. Cellule selon la revendication 1, dans laquelle ledit écran de protection (50) peut coulisser hors de ladite base (40) et dans ladite position abaissée il entoure ladite base (40).

3. Cellule selon l'une quelconque des revendications précédentes, dans laquelle ledit écran (50) comprend au moins un montant (52), qui est porté par ledit système de déplacement vertical, et un boîtier de protection (55, 54, 56, 58), qui est porté par ledit montant et qui est libre de coulisser hors de ladite base.

4. Cellule selon l'une quelconque des revendications précédentes, dans laquelle ledit écran (50) a un cadre comprenant au moins un montant (52), qui est porté par ledit système de déplacement vertical, et une structure de cage (54, 56, 58), qui est portée par ledit montant et qui est libre de coulisser hors de ladite base.

5. Cellule selon la revendication 4, dans laquelle ladite structure de cage comprend un cadre supérieur (54) fixé à l'extrémité supérieure dudit montant (52), un cadre inférieur (58) et une série de tiges (56), qui relient ensemble lesdits cadres supérieur et inférieur (54, 58).

6. Cellule selon la revendication 4, dans laquelle ladite structure de cage comprend un cadre supérieur (54) et une série de tiges (56), qui sont suspendues à partir dudit cadre supérieur.

7. Cellule selon la revendication 5, dans laquelle ledit cadre inférieur (54, 58) a, dans une vue en plan, un profil fermé qui est plus grand que la section globale de ladite base (40) et entoure ladite base restant à distance de celui-ci de manière à être libre de coulisser par rapport à ladite base (40).

8. Cellule selon l'une quelconque des revendications précédentes, dans laquelle ledit robot est monté sur un socle (30) porté par ledit système de déplacement vertical (34, 32).

9. Cellule selon l'une quelconque des revendications précédentes, dans laquelle ledit système de déplacement comprend au moins un vérin de levage (34, 64), au moins un guide de coulissement (32, 82, 84) et au moins un moteur électrique (101, 103).

10. Cellule selon l'une quelconque des revendications précédentes, comprenant une unité de commande dudit système de déplacement vertical.

11. Cellule selon l'une quelconque des revendications précédentes, comprenant au moins l'un des composants suivants :
- un tiroir extractible (92) contenant ladite unité de commande dudit robot ;
- un tiroir extractible (94) contenant un dispositif mobile qui peut être manuellement saisi pour commander ledit robot par l'opérateur, où de préférence ledit tiroir contient un support pour ledit dispositif, qui est incliné vers l'arrière et est réglable en hauteur ; et
- une étagère de repos extractible (98).

12. Cellule selon l'une quelconque des revendications précédentes, comprenant au moins un appareil photo pour prendre des photos de la surface de travail de ladite cellule.

13. Cellule selon l'une quelconque des revendications précédentes, dans laquelle ladite surface de travail (P) a un réseau ordonné de trous (14) pour une installation rapide d'accessoires sur ladite surface de travail.

14. Cellule selon l'une quelconque des revendications précédentes, dans laquelle ledit système pour le déplacement dudit robot constitue un premier système de déplacement, et ledit système pour le déplacement dudit écran (50) constitue un deuxième système de déplacement, où lesdits premier et deuxième systèmes comprennent chacun au moins un vérin de levage (34, 64), au moins un guide de coulissement (32, 82, 84) et au moins un moteur électrique (101, 103).
